# EUROPEAN PATENT APPLICATION

(11) **EP 1 445 814 A1**
(43) Date of publication of application: **11.08.2004**
(21) Application number: 02777971.9
(22) Date of filing: 25.10.2002
(51) Int. Cl.: H01M 8/02, H01M 8/04, H01M 8/12, H01M 8/24

(54) **FUEL CELL**

(30) Priority: 26.10.2001 JP 2001328631
(71) Applicant: SUMITOMO PRECISION PRODUCTS COMPANY LIMITED, Amagasaki-shi, Hyogo Prefecture 660-0891 (JP)
(72) Inventor: ORISHIMA, H., SUMITOMO PRECISION PRODUCTS CO., LTD, Amagasaki-shi, Hyogo 660-0891 (JP); HIRAKAWA, M., SUMITOMO PRECISION PRODUCTS CO., LTD, Amagasaki-shi, Hyogo 660-0891 (JP); KASHIMA, S., SUMITOMO PRECISION PRODUCTS CO., LTD, Amagasaki-shi, Hyogo 660-0891 (JP)
(74) Representative: Butler, Lance
(86) International application number: PCT/JP2002/011124
(87) International publication number: WO 2003/043110

(57) **Abstract**

A solid oxide fuel cell capable of increasin a thermal cycle resistance by uniformizin the flow and distribution of the as of air and fuel in cells, wherein a center through-hole and a plurality of peripheral through-holes are formed at the center part of a cell formation plate and atthe center parts of gas separator plates, respectively, and a reaction gas passaae is formed at the outer peripheral parts of the gas separator plates.

## Description

### TECHNICAL FIELD

This invention relates to a novel constitution of a solid oxide fuel cell (hereinafter abbreviated as SOFC), and more particularly relates to a fuel cell that has fewer parts, which makes it more compact, lightweight, and inexpensive, by using a gas separator plate in which a gas passage hole component is provided at the center of a substrate, which allows the cell formation plate and metal gas separator plate to be much thinner, for example, the pitch of the stacked cell formation plate can be less than 2 mm, and the entire laminated substrate can be fastened at the gas passage hole component at the center of the substrate so as to improve thermal cycle resistance during high-temperature operation, and in particular gas passages are formed by etching on both sides of a metal plate.

### BACKGROUND ART

The SOFCs in practical use today are known as cylindrical SOFCs, in which a porous cermet of nickel and yttria-stabilized zirconia is used as a fuel electrode, yttria-stabilized zirconia is used as a solid electrolyte, lanthanum manganite is used as an air electrode, lanthanum chromite is used as an interconnector, one end of the cylindrical cell is closed off, and many of these cells are bundled together into a stack unit.

There has also been practical application of what are known as flat SOFCs, in which a cell comprising successive laminations of a fuel electrode composed of a porous sheet, an electrolyte, and an oxygen electrode composed of a porous material is sandwiched between interconnect plates made of a non-porous material, and this assembly is disposed in a stack.

The basic structure of fuel cell power generation, as discussed above, consists of fuel reformation, the cell itself, and an inverter to convert the direct current generated by the cell into alternating current, but it is said that an SOFC can use as fuel not only hydrogen (H₂), but also methane (CH₄) and the like, making possible the reformation of the fuel gas in the cell (internal reformation). Specifically, any unburned gas left over from the reaction in the cell can be burned, and this combustion heat utilized in the reformation reaction (which is an endothermic reaction).

Because of its highly efficient utilization of heat, an SOFC can be expected to achieve a power generation efficiency of 50% or higher, and since the cell operates at a temperature as high as 1000□, it is believed to be feasible to apply the waste heat to a cogeneration system in which high-temperature steam is recovered by a steam recovery device.

For the sake of heat resistance, cells are generally formed from a solid ceramic, and cells are bundled or stacked in order to achieve more efficient power generation, so care must be taken to avoid cracks caused by the temperature differential between the various members, the difference in the coefficients of thermal expansion, and so forth.

Cell density can be higher with the above-mentioned flat SOFCs, but because of the stacked construction, it is important to improve thermal cycle resistance by minimizing variance in the temperature distribution in the planar direction and differences in the coefficients of thermal expansion of the various parts of the cell, but poor thermal cycle resistance is a fundamental problem with flat SOFCs.

With a cylindrical SOFC, an advantage to employing a structure in which just the top of the cell is fixed is that reliability is higher with respect to expansion and contraction in the cylinder lengthwise direction versus thermal cycle resistance. However, a structure in which numerous cylindrical cells are bundled together, and a structure designed to improve the efficiency of air and fuel flow are complicated, the air utilization efficiency is low, the units take up more space, and power output is low because the electrical conduction of ceramic materials is poor, requiring some special design for electrical connections, such as sandwiching them between nickel felt.

### DISCLOSURE OF THE INVENTION

It is an object of the present invention to provide a basic structure with which the gas piping and passage system of a cell can be vastly simplified. It is another object of the present invention to provide an SOFC having a stacked structure in order to greatly increase power generation efficiency and reduce as much as possible the amount of unburned gas.

It is yet another object of the present invention to provide an SOFC that has fewer parts, is more lightweight and compact, and can be manufactured less expensively.

It is a further object of the present invention to provide an SOFC with which thermal cycle resistance is less apt to occur because of uniform distribution of stress and generated heat and uniform flow and distribution of the air and fuel gases of the cell.

The inventors conducted various studies into an SOFC structure that would afford uniform distribution and flow of air (oxidant) gas and hydrogen (fuel) gas, and as a result turned their attention to providing gas passages extending radially from the center of a disk substrate, and to this end providing through-holes in the center of the disk substrate and concentrating the gas inlets and outlets, whereupon they discovered that if a passage hole component is formed in the center part of the substrate, having a gas passage-use center through-hole at the axial center and a plurality of gas passage-use peripheral through-holes disposed symmetrically around this center hole, the various cell substrates and so forth that have been stacked can be supported and fastened by the gas passage hole component at the center, the flow of fuel gas and oxidant gas can be optimized and the distribution of each gas made uniform, the temperature distribution will be particularly uniform in the radial direction, and thermal expansion will be accompanied by less thermal stress and so on.

The inventors also discovered that a gas passage hole component comprising a center through-hole and a plurality of peripheral through-holes are disposed symmetrically around this center hole allows a shaft to be inserted for support and fastening in the center part of the above-mentioned stacked stack unit, and that it is possible to suitably dispose heat exchange means for heating a gas or disposing of waste heat by utilizing the above-mentioned shaft or using a heat pipe, double pipe, or the like.

The inventors also discovered that if the above-mentioned gas passage hole component is formed at the center of a substrate, it is possible to employ a cell structure in which a fuel-side electrode layer and an air-side electrode layer are each formed on a main surface of substrates on the outer periphery of the gas passage hole component at the axial center of a solid electrolyte substrate, and since the cell formation plate can be made thinner, a thin gas separator plate made of metal can be suitably stacked and disposed, so that the cell stack can be supported and fastened in the center part, and the resulting fuel cell will be extremely lightweight and compact.

The inventors also discovered that the gas separator plate can have a structure in which a fuel passage or air passage pattern is formed on one or both sides of each of the substrates on the outer periphery of the gas passage hole component, and that this passage pattern can be easily formed by disposing a metal or alloy mesh or a punched or etched member on the main surfaces of a plate, and that a passage pattern can be easily formed by using a metal or alloy plate and etching the surface thereof, allowing for a thinner cell formation plate in which electrode films are formed on both sides of the above-mentioned solid electrolyte substrate, and if cell formation plates and gas separator plates are alternately stacked, for example, the lamination pitch thereof can be 2 mm or less, and even about 1 mm, affording a fuel cell that is extremely lightweight and compact.

The inventors further discovered that by employing a structure in which a gas passage pattern or electrode layer is formed on a main surface of the above-mentioned thin plate, it is possible for the gas separator plate to have two gas passages serving as interconnectors and whose shapes are separately designed and formed according to the individual gas compositions and flow amounts, and that because a fine pattern of gas passages can be formed by disposing a mesh member or etched member or formed by etching both sides of the gas separator plate, cell performance can be enhanced through optimization of gas flow, and by using a metal it is possible to increase collection capability and minimize power generation loss.

Specifically, the fuel cell pertaining to the present invention comprises a stack produced by stacking [i] a cell formation plate having in the center part of a disk a passage hole component made up of a center through-hole disposed concentrically with the center axis and a plurality of peripheral through-holes provided around the outer periphery thereof and [ii] a gas separator plate having in the center part of a disk a passage hole component constituted the same as above and having reaction gas passages formed around the outer periphery thereof, some of all of the various through-holes forming gas passages for a fuel or oxidant gas, and the gas passages between the stacked plates being connected or shut off by the gas passage pattern formed in the passage hole component.

The inventors also discovered that, with a fuel cell constituted as above, if a structure is employed in which the center through-hole or the peripheral through-holes or both are used only as insertion holes for a fastening shaft of the stack, or also double as gas passages, then support will be provided by the axial center of a fuel cell having a stacked construction comprising numerous stacked thin disks (that is, of a cylindrical stack), so the thermal balance and thermal cycle resistance will both be excellent.

The inventors also discovered that, with a fuel cell constituted as above, it is possible to employ a flow-out open gas flow system in which the fuel gas and oxidant gas flows are released from the passage hole component at the center, through the reaction gas passages between the stacked plates, to the outer periphery of the stack, or a flow-in open gas flow system in which the fuel gas and oxidant gas conversely are introduced from the stack outer periphery, through the reaction gas passages between the stacked plates, and into the center passage hole component, or a closed gas flow system in which the fuel gas and the oxidant gas flows from the passage hole component at the center, through the radial reaction gas passages between the stacked plates, and are returned to the passage hole component at the center. Specifically, it is possible to employ a system in which the fuel gas and oxidant gas are both a flow-out open gas flow or a closed gas flow, or a system in which the fuel gas and oxidant gas are different from each other, with one being an open gas flow (flow-out or flow-in) and the other a closed gas flow. This makes it possible to provide fuel cells of various construction, according to the application and function required, such as improving power generation efficiency, simplifying the construction, and increasing the gas recovery efficiency.

Furthermore, the inventors perfected the invention upon discovering that, with a fuel cell constituted as above, whichever type of flow is employed for the fuel gas and oxidant gas, the flow of oxidant gas can be increased according to the amount of heat generated, the stress distribution in the radial direction can be made uniform and the temperature differential between the outer periphery and the center part of the stack can be reduced by increasing the thickness of the gas separator plate so as to improve heat diffusion, and in particular, if the structure is such that the fuel gas flows from the center of the stack to the outer periphery, and the oxidant gas flows from the outer periphery to the center, so that compression stress is generated toward the center of the stack, the temperature differential between the outer periphery and the center part of the stack can be reduced and the stress distribution in the radial direction can be made uniform, resulting in excellent thermal balance and thermal cycle resistance.

### BRIEF DESCRIPTION OF THE DRAWINGS

Fig. 1A is a front view and Fig. 1B is a side view of a cell formation plate pertaining to the present invention;
Fig. 2A is a front view and Fig. 2B is a rear view of a gas separator plate pertaining to the present invention;
Fig. 3 is an exploded view illustrating a lamination structure of a cell formation plate and a gas separator plate pertaining to the present invention;
Fig. 4 is an exploded view illustrating another lamination structure of the cell formation plate and gas separator plate pertaining to the present invention;
Fig. 5A is a front view and Fig. 5B is a rear view of another gas separator plate pertaining to the present invention;
Fig. 6A is a front view and Fig. 6B is a rear view of another gas separator plate pertaining to the present invention;
Fig. 7A is a front view and Fig. 7B is a rear view of another gas separator plate pertaining to the present invention;
Fig. 8 is a front view of another gas separator plate pertaining to the present invention;
Fig. 9A is a temperature distribution graph (position (distance (mm) from the center)/temperature (°C)) and Fig. 9B is a stress distribution graph (position (distance (mm) from the center)/stress (kg/mm²) for the cell stack unit in Example 1;
Fig. 10A is a temperature distribution graph (position (distance (mm) from the center)/temperature (°C)) and Fig. 10B is a stress distribution graph (position (distance (mm) from the center)/stress (kg/mm²) for the cell stack unit in Example 2;
Fig. 11A is a temperature distribution graph (position (distance (mm) from the center)/temperature (°C)) and Fig. 11B is a stress distribution graph (position (distance (mm) from the center)/stress (kg/mm²) for the cell stack unit in Example 3;
Fig. 12A is a temperature distribution graph (position (distance (mm) from the center)/temperature (°C)) and Fig. 12B is a stress distribution graph (position (distance (mm) from the center)/stress (kglmm²) for the cell stack unit in Example 4;
Fig. 13A is a temperature distribution graph (position (distance (mm) from the center)/temperature (°C)) and Fig. 13B is a stress distribution graph (position (distance (mm) from the center)/stress (kg/mm²) for the cell stack unit in Example 5;

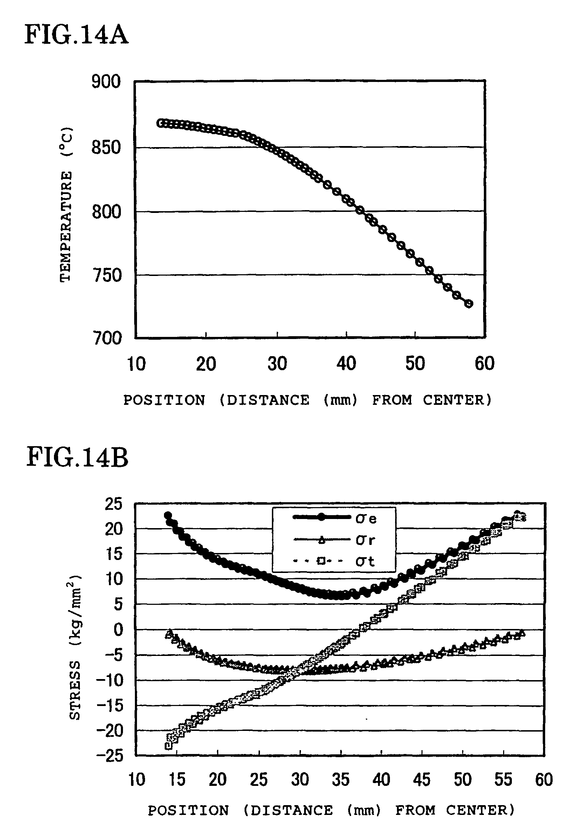

Fig. 14A is a temperature distribution graph (position (distance (mm) from the center)/temperature (°C)) and Fig. 14B is a stress distribution graph (position (distance (mm) from the center)/stress (kg/mm²) for the cell stack unit in Example 6; and
Fig. 15 is a performance graph plotted from the output voltage and current of the cell stack unit in Example 6.

### BEST MODE FOR CARRYING OUT THE INVENTION

The present invention is characterized by the structure of a fuel cell formed by stacking a thin cell formation plate and a gas separator plate, and more particularly the structure of a fuel cell in which gas passages are provided such that the flow of reaction gas is basically either along a main surface of each thin plate, radially from the center part to the outer periphery, or conversely from the overall outer periphery toward the center part, or from the center radially out to the outer periphery and then back to the center part, and a through-hole is formed in the center part of each thin plate to form passages for supplying and passages for allocating the oxidant gas and fuel gas, with a gas supply passage being formed in the through-holes in the lamination direction when the plates are stacked.

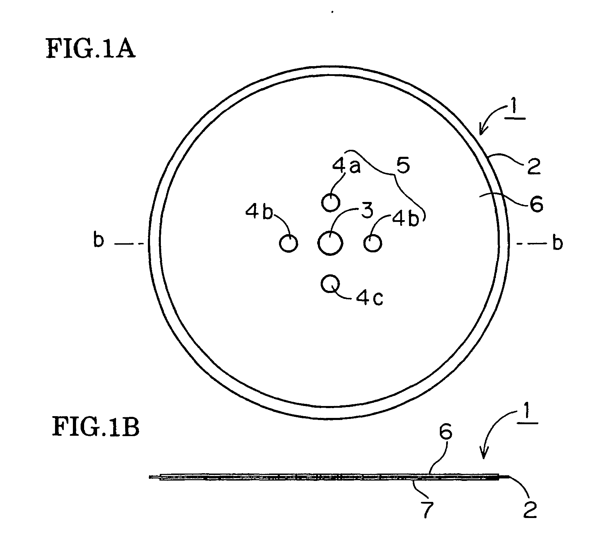

The cell formation plate 1 shown in Fig. 1 has formed therein a gas passage hole component 5, comprising a center through-hole 3, used as a fuel gas passage, in the axial center of a solid electrolyte substrate 2 consisting of a thin disk, and a plurality of (four in this example) peripheral through-holes 4a to 4d, used as oxidant gas passages, disposed symmetrically around this center hole. Specifically, the gas passage hole component 5 is made up of one center through-hole 3 that is at the axial center, and two or more peripheral through-holes 4 disposed in axial symmetry around the periphery of this center hole.

Also, with the cell formation plate 1, a fuel-side electrode layer 6 and an oxidant-side electrode layer 7 are formed over the entire surface of the solid electrolyte substrate 2, one on each side.

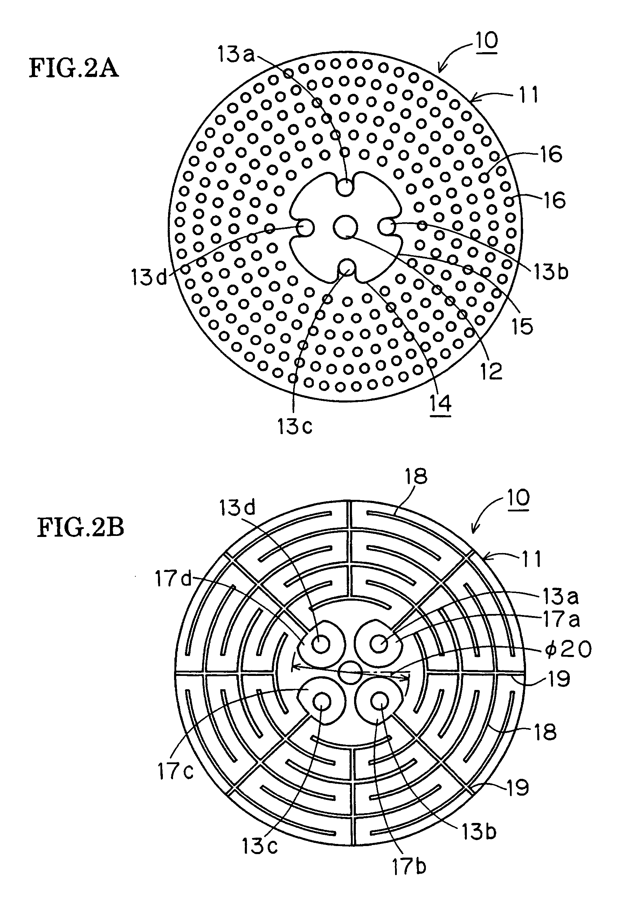

Fig. 2 shows a gas separator plate 10, and just as with the above-mentioned cell formation plate 1, this gas separator plate 10 also has formed therein a gas passage hole component 14, comprising a center through-hole 12, used as a fuel gas passage, at the axial center of a metal substrate 11 consisting of a thin disk, and four peripheral through-holes 13a to 13d, used as oxidant gas passages, disposed symmetrically around this center hole.

The gas separator plate 10 has a gas passage pattern formed on a main surface thereof, and the example shown in Fig. 2A is of an oxidant gas pattern, in which a protrusion 15 is formed on a gas passage hole component 14 between the center through-hole 12 and the peripheral through-holes 13a to 13d, small protrusions 16 are formed radiating outward from the peripheral through-holes 13a to 13d, and the outer periphery of the center through-hole 12 is blocked off by the protrusion 15 when the gas separator plate 10 is stacked with the cell formation plate 1, so no fuel gas is supplied from the center through-hole 12 between the cell formation plate 1 and the gas separator plate 10.

However, the small protrusions 16 are spaced apart around the peripheral through-holes 13a to 13d, so oxidant gas is supplied and dispersed through these holes between the cell formation plate 1 and the gas separator plate 10.

The example shown in Fig. 2B is of a fuel gas passage pattern in the gas separator plate 10, in which protrusions 17a to 17d are formed around the peripheral through-holes 13a to 13d, and a plurality of concentric arc-shaped protrusions 18 and radial protrusions 19 are formed around the outer periphery of the peripheral through-holes 13a to 13d, thereby providing a gas passage pattern that extends radially and snakes around the gas passage hole component 14. Therefore, when the gas separator plate 10 is stacked with the cell formation plate 1, the outer periphery of the peripheral through-holes 13a to 13d is blocked off by the protrusions 17, so no oxidant gas penetrates between the cell formation plate 1 and the gas separator plate 10, and the fuel gas is supplied and dispersed from the center through-hole 12.

If the gas separator plate 10 shown in Fig. 2 is made from a metal or alloy such as stainless steel, it will be possible to form the required portions easily and precisely by etching, while leaving behind the various protrusions 15, 17a to 17d, 18, and 19 and the small protrusions 16 that make up the gas passage patterns discussed above.

Collector-use protrusions can also be provided by this etching within the fuel gas passages that snake around as mentioned above. Protrusions or ribs of a width or diameter of 1 mm or less can be produced at a pitch of 3 mm or less, for example, such as disposing needles at the required spacing, so as not to affect the gas flow.

The gas passage pattern provided to a main surface of the gas separator plate 10 can comprise either a fuel gas passage pattern or an oxidant gas passage pattern provided to one side of a thin stainless steel disk, or fuel gas and oxidant gas passage patterns can both be provided, one on each side.

A known metal material that can be used as an interconnector can be appropriately selected for the gas separator plate, but when heat resistance, corrosion resistance, and compatibility with the coefficients of thermal expansion of other members are taken into account, a ferrite alloy, austenite alloy, or Fe-Cr-W alloy material is preferred. An example of a ferrite alloy is SUS 430, and that of an austenite alloy is SUS 310. An Fe-Cr-W alloy material typified by Fe-18Cr-7W or the like can also be used.

It is also possible to provide any of various coating materials on the gas separator plate surface. For instance, the same material as the (La,Sr)CrO₃ or other oxidant-side electrode material can be used in order to prevent the evaporation of chromium from ferrite steel and to reduce electrical contact resistance on the oxidant gas side.

As shown in Fig. 1B, the cell formation plate 1 can be structured such that the fuel-side electrode layer 6 and the oxidant-side electrode layer 7 are provided on either side of the solid electrolyte substrate 2, and any known material can be employed for the solid electrolyte, the fuel-side electrode layer, and the oxidant-side electrode layer.

For example, ordinary stabilized zirconia can be used for the solid electrolyte, an Ni/YSZ cermet for the fuel-side electrode layer, and (La,Sr)MnO₃ for the oxidant-side electrode layer. Any known material can be employed for these.

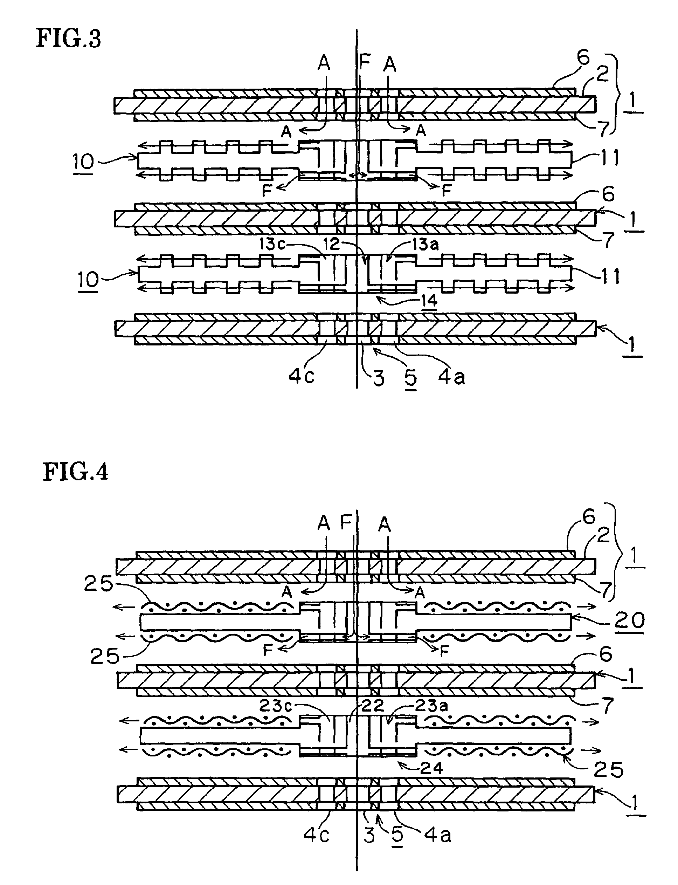

In the present invention, the lamination of the cell formation plate 1 and the gas separator plate 10 can comprise any of various lamination patterns, as dictated by the gas passage structure of the substrates and so forth. For instance, the stack example shown in Fig. 3 is produced by the alternate lamination of a cell formation plate 1 in which the fuel-side electrode layer 6 and the oxidant-side electrode layer 7 are formed on either side of the solid electrolyte substrate 2 as shown in Fig. 1, and a gas separator plate 10 in which a fuel gas passage pattern and an oxidant gas passage pattern are provided on either side of a thin stainless steel plate as shown in Fig. 2.

A particularly lightweight cell stack unit can be achieved if the gas passages are formed by etching on both sides of the gas separator plate 10, since the gas separator plate 10 will be much lighter and fewer laminations will be required.

As discussed above, the gas passage hole components 5 and 14 of the cell formation plate 1 and the gas separator plate 10 have center through-holes 3 and 12 used for fuel gas (F) passages at the axial center, and four peripheral through-holes 4a to 4d and 13a to 13d used for oxidant gas (A) passages are disposed symmetrically around these center holes, respectively. Therefore, when the cell formation plate 1 and the gas separator plate 10 are alternately stacked as shown in Fig. 3, this forms five gas passages of communicating through-holes in the lamination direction.

The thin plates are not touching in the state illustrated in Fig. 3, but the hydrogen of the fuel gas (F) supplied from the fuel gas passage (the center through-hole 3 or 12) is introduced and dispersed underneath the various gas separator plates 10 and therefore comes into contact with the fuel-side electrode layers 6 on the upper side of the cell formation plates 1, while the air of the oxidant gas (A) supplied from the oxidant gas passages (the peripheral through-holes 4a to 4d or 13a to 13d) is introduced and dispersed on the upper side of the various gas separator plates 10 and therefore comes into contact with the oxidant-side electrode layers 7 on the lower side of the cell formation plates 1, and is discharged at the outer periphery of the cell formation plates 1 and the gas separator plates 10.

The stack example shown in Fig. 4 comprises cell formation plates 1 and gas separator plate 20 of the same constitution as in Fig. 3, but the gas passages on both main surfaces of the gas separator plates 10 in Fig. 3 constitute passages by means of grooves formed by etching a metal substrate, whereas with the gas separator plates 20 in Fig. 4, a gas passage hole component 24 is formed by etching in the same manner as in Figs. 2A and 2B, and a ring-shaped metal mesh member 25 is disposed around the outer periphery, thereby forming gas passages on both main surfaces.

In this case, the metal mesh member 25 increases collection capability, that is, reduces power generation loss. The metal mesh member can be made of a plain weave, twill weave, etc., of JIS-rated stainless steel wire or nickel alloy wire, and the wire diameter can be suitably selected from a range of about 0.05 to 0.2 mm.

It should go without saying that the same operation and effect as above can be achieved by substituting the above-mentioned metal mesh member for a punched or etched member of a metal or alloy material with which a gas passage pattern can be formed.

With the stack structure shown in Figs. 3 and 4, the cell formation plates 1 are stacked with the gas separator plates 10 or 20, a shaft is inserted into the center through-holes 3 and 12 or 22, a fastening disk is placed against both ends of the stack, and these are each fastened to the shaft with a nut, which holds together and fastens the stacked plates at the various gas passage hole components 5, 14, and 24, so that the stacked cells are supported at the center part of the various disks, each gas can flow radially out from the center, the thermal cycle resistance is reduced, and gas flow is made uniform.

With this invention, the holes through which the fastening shaft is inserted may be just the center through-holes as in the above examples, or may consist of the center through-holes and all or some of the peripheral through-holes, or may consist only of all or some of the peripheral through-holes. Thus, a variety of layouts can be employed, all of which involve fastening the stack by disposing in axial symmetry one or more shafts.

Because the center through-holes and the peripheral through-holes serve as gas supply or discharge passages, when a plurality of fastening shafts are inserted into the required through-holes, some kinds of gas may subject [the holes] to heat, so the passages and the types of gas should be suitably selected so that the heat coming into the fastening shafts is uniform. Also, the fastening shaft can be can be a heat conductor such as a bulk material or a heat pipe, or can be a double pipe or the like, so that heat release and recovery from the cell stack unit are carried out actively, or specific gas heating and temperature control can be performed.

With the lamination structure comprising stacked cells shown in Figs. 3 and 4, the stacked cell unit can be placed in a cylinder so that the above-mentioned gas discharged to the outer periphery can be recovered. Alternatively, although not shown in the drawings, through-holes can be suitably disposed around the outer periphery of the cell formation plate 1 and the gas separator plate 10 or 20, so as to form through-holes with which the oxidant gas and fuel gas are separately recovered, just as with the gas passage hole components discussed above.

The cell unit examples illustrated in Figs. 3 and 4 depict an open gas flow system, in which the fuel gas and oxidant gas are released from the passage hole component at the center, through the radial gas passages between the stacked plates, to the outer periphery of the laminate.

With the constitution of this invention, it is also possible to employ a closed gas flow system, in which the fuel gas and the oxidant gas flows from the passage hole component at the center, through the radial gas passages between the stacked plates, and are returned from the stack outer periphery to the passage hole component at the center. The oxidant gas and fuel gas can both flows through a closed gas flow, or an open gas flow system and a closed gas flow system can be combined for the oxidant gas and fuel gas.

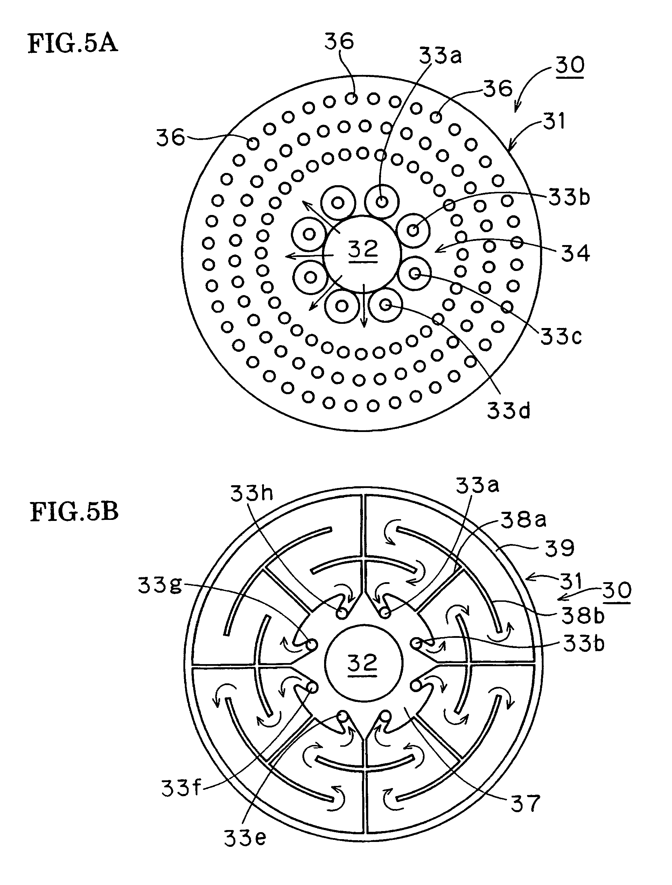

The gas separator plate 30 shown in Fig. 5A is the same as the example shown in Fig. 2A in that it is an oxidant gas passage pattern for an open gas flow system. A gas passage hole component 34 is formed by one center through-hole 32 with a relatively large inside diameter provided at the center of a metal substrate 31, and eight peripheral through-holes 33a to 33h with a smaller inside diameter disposed around this center hole. Annular protrusions 35a to 35h are formed around the peripheral through-holes 33a to 33h, and numerous small protrusions 36 are formed concentrically around the outer periphery of the peripheral through-holes 33a to 33h.

Although not shown in the drawings, when the gas separator plate 30 shown in Fig. 5A is stacked against a cell formation plate that has a gas passage hole component comprising the center through-hole 32 and the eight peripheral through-holes 33a to 33h and in which a fuel-side electrode layer and a oxidant-side electrode layer are formed on the main surfaces (one on each side) of each substrate, the peripheral through-holes 33a to 33h are blocked off by the annular protrusions 35a to 35h, the center through-hole 32 communicates between the cell formation plate and the gas separator plate 30, and the oxidant gas supplied from the center through-hole 32 passes between the annular protrusions 35a to 35h in the radial direction, is dispersed by the small protrusions 36, and is released from the outer peripheral ends of the plates.

The example shown in Fig. 5B is of a fuel gas passage pattern formed on the other main surface of the gas separator plate 30, and involves a closed gas flow system. Specifically, a substantially annular protrusion 37 is formed all the way around the outer periphery of the center through-hole 32 provided in the center of the metal substrate 31, except for part of the periphery of the peripheral through-holes 33a to 33h, numerous arc-shaped protrusions 38b and radial protrusions 38a are formed concentrically around the outer periphery of the peripheral through-holes 33a to 33h so as to connect with the substantially annular protrusion 37, and a ring-shaped protrusion 39 is formed at the outer peripheral edge of the metal substrate, so that when a cell formation plate having the same passage hole component as described above is stacked with this gas separator plate 30, this forms a gas passage pattern in which the fuel gas supplied through the specific peripheral through-holes 33b, 33c, 33f, and 33g is introduced in the radial direction and proceeds by snaking toward the outer periphery, then snakes back from the outer periphery and returns toward the center, after which it enters other specific peripheral through-holes 33a, 33d, 33e, and 33h.

Therefore, with a stack comprising a stack of cells consisting of a cell formation plate and a gas separator plate 30 as shown in Figs. 5A and 5B, the oxidant gas is supplied from the center through-hole 32 and discharged to the outer periphery with an open gas flow system, while the fuel gas is supplied from the peripheral through-holes 33b, 33c, 33f, and 33g, after which it enters other specific peripheral through-holes 33a, 33d, 33e, and 33h and is recovered by a closed gas flow system.

Also, with a stack comprising a stack of cells consisting of a cell formation plate and a gas separator plate 30 as shown in Figs. 5A and 5B, the fuel gas can be supplied from the peripheral through-holes 33b, 33c, 33f, and 33g, after which it enters other specific peripheral through-holes 33a, 33d, 33e, and 33h and is recovered by a closed gas flow system, while the oxidant gas, conversely to the structural example given above, comprises a flow-in gas flow system in which it flows from the entire periphery on the outside of the cell, through the numerous small protrusions 36 disposed concentrically in the gas separator plate 30, and flows into the center through-hole 32.

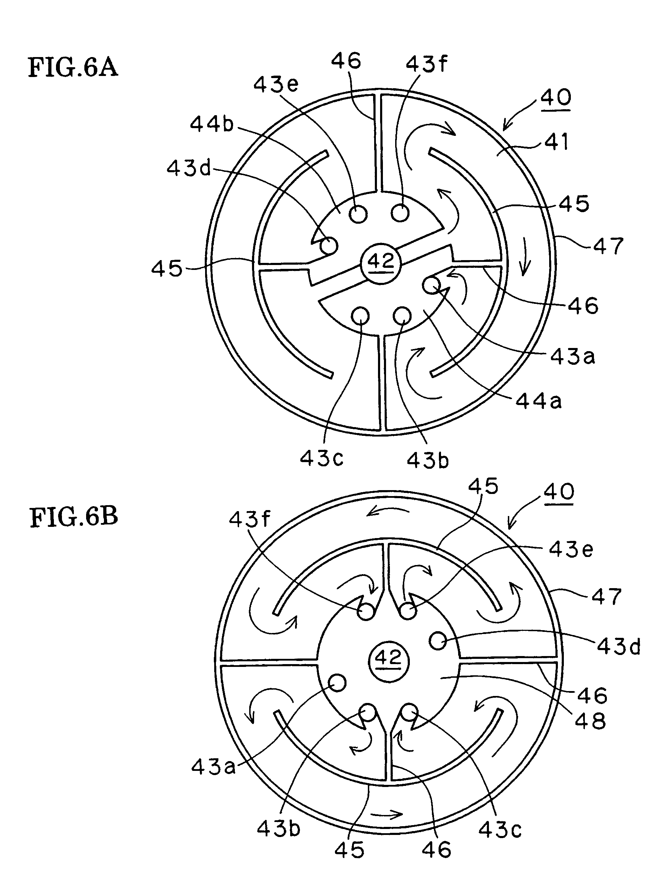

With the gas separator plate 40 shown in Fig. 6, the fuel gas passage pattern and the oxidant gas passage pattern are both formed so as to comprise a closed gas flow system. The structure shown in Fig. 6A is a fuel gas passage pattern, in which a gas passage hole component 44 is formed by one center through-hole 42 with a relatively large inside diameter provided at the center of a metal substrate 41, and six peripheral through-holes 43a to 43f with a smaller inside diameter disposed around this center hole. A substantially semicircular protrusion 44a is formed around the peripheral through-holes 43b and 43c, but not around part of the peripheral through-hole 43a, and a substantially semicircular protrusion 44b is formed around the peripheral through-holes 43e and 43f, but not around part of the peripheral through-hole 43d, so that the center through-hole 42 is sandwiched between these two semicircular protrusions 44a and 44b, forming a passage in the diametric direction.

Arc-shaped protrusions 45 provided around the outer periphery of the substantially semicircular protrusions 44a and 44b on the metal substrate 41 are formed connected to radial protrusions 46, a ring-shaped protrusion 47 is formed around the outer periphery, and when a cell formation plate in which a fuel-side electrode layer and a oxidant-side electrode layer are formed on either side of a substrate and having a gas passage hole component in which through-holes are disposed in the same layout as above is stacked, the fuel gas supplied from the center through-hole 42 snakes along the radial protrusions 46 and the arc-shaped protrusions 45, flows back to the center part, and is recovered from specific peripheral through-holes 43a and 43d.

The structure shown in Fig. 6B is an oxidant gas passage pattern formed on the other main surface of the gas separator plate 40. The layout of the through-holes is exactly the same, and a substantially circular protrusion 48 is formed so as to cover the periphery of the center through-hole 42 and the periphery of all of the peripheral through-holes 43a to 43f, but the protrusion does not surround the peripheral through-holes 43b, 43c, 43e, and 43f, so that these holes are open on the outer side. Arc-shaped protrusions 45 are connected by radial protrusions 46 to the protrusion 48 between the adjacent peripheral through-holes 43b and 43c and between the adjacent peripheral through-holes 43e and 43f, which forms a passage that snakes over a semicircular main surface between an outer periphery ring-shaped protrusion 47.

With the oxidant gas passage pattern shown in Fig. 6B, the oxidant gas introduced from the peripheral through-hole 43e, for example, snakes along the radial protrusions 46 and the arc-shaped protrusions 45, flows back to the center part, and is discharged and recovered from the peripheral through-hole 43f that is adjacent on the introduction side.

Therefore, with a stack comprising a stack of cells consisting of a cell formation plate and a gas separator plate 40 as shown in Fig. 6, the fuel gas is supplied from the center through-hole 42 and discharged by a closed gas flow system to specific peripheral through-holes 43a and 43d, while the oxidant gas is supplied from the peripheral through-holes 43b and 43e and then enters other specific peripheral through-holes 43c and 43f and is recovered by a closed gas flow system.

The gas passage pattern of the closed gas flow system shown in Fig. 6B is formed on both sides of a gas separator plate 50 to create closed gas flows of oxidant gas and fuel gas.

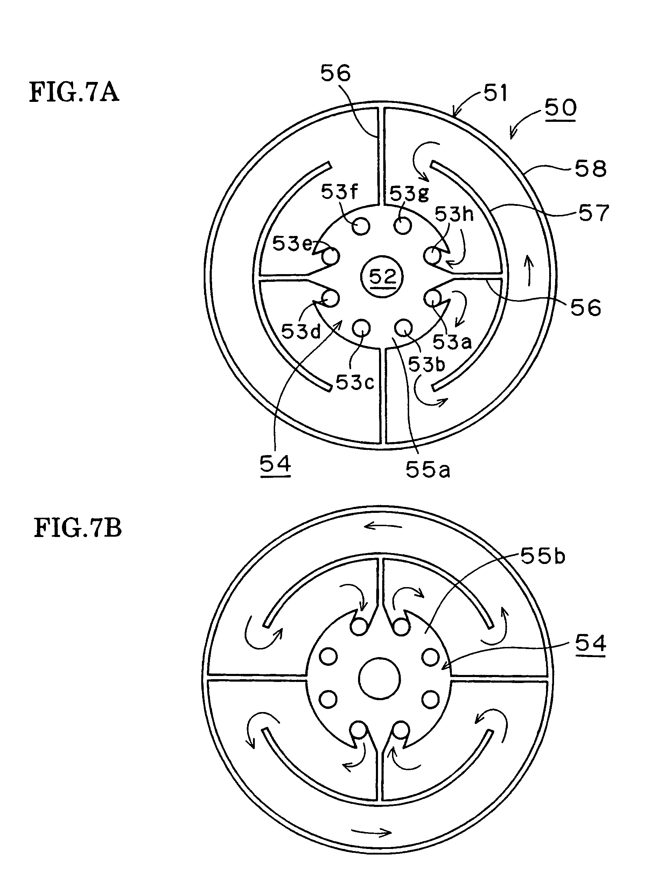

Specifically, as shown in Figs. 7A and 7B, a gas passage hole component 54 is formed by one center through-hole 52 with a relatively large inside diameter provided at the center of a metal substrate 51, and eight peripheral through-holes 53a to 53h with a smaller inside diameter disposed around this center hole. Protrusions 55a and 55b that connect or shut off communication with the through-holes are disposed so as to surround the center through-hole 52 and the peripheral through-holes 53a to 53h.

In Fig. 7A, the protrusion 55a is formed so as to leave open the portions on the outside of peripheral through-holes 53a, 53h, 53d, and 53e, and arc-shaped protrusions 57 are connected by radial protrusions 56 to the protrusion 55a between the adjacent peripheral through-holes 53a and 53h and between the adjacent peripheral through-holes 53d and 53e, which forms a passage that snakes over a semicircular main surface between an outer periphery ring-shaped protrusion 58.

With this structure, the pattern in Fig. 7A can be the oxidant gas passages, and as shown in Fig. 7B, if the protrusion 55b is turned by 90 degrees from the pattern of the protrusion 55a so as to change the peripheral through-holes that communicate with the passages, a closed gas flow can be created in which the fuel gas flows between different peripheral through-holes 53b and 53c and peripheral through-holes 53f and 53g than those in Fig. 7A.

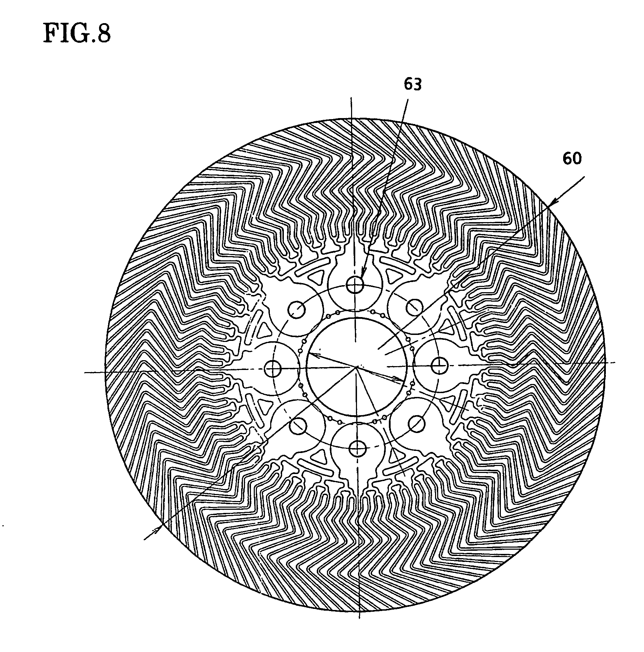

With the gas separator plate 60 shown in Fig. 8, an attempt was made to maximize the advantages of forming the gas passages by etching on both sides of a metal plate. Specifically, the flow pattern was designed to allow more uniform flow, with no stagnation, and increase reaction efficiency according to differences in the type of supplied gas, gas pressure and flow quantity, and so forth. A pattern was selected that would achieve sufficient collection capability, and was etched on both sides of the metal plate.

Any pattern can thus be precisely formed by etching, and an interconnector with a fine pattern and good collection performance and gas diffusibility can be manufactured.

The passage pattern will now be described in detail. Fig. 8 shows an oxidant gas passage pattern, which is basically the same as the oxidant gas passage pattern with an open gas flow system in which the oxidant gas flows from the center outward, as shown in Fig. 5A. A gas passage hole component is formed by one center through-hole with a relatively large inside diameter provided at the center of a metal substrate, and eight peripheral through-holes 63 with a smaller inside diameter disposed around this center hole. Substantially annular protrusions are formed around these peripheral through-holes, and slender dogleg protrusions are disposed radially at specific intervals as if to connect in zigzag fashion the numerous concentrically disposed small protrusions shown in Fig. 5A. This forms an oxidant gas passage going from the center through-hole, through the slender dogleg passages, to the outer periphery. The series of slender dogleg protrusions (grooves) looks like a herringbone pattern.

Although not shown in the drawings, a fuel gas passage pattern is provided on the rear main surface of the metal substrate shown in Fig. 8, on which are similarly formed slender dogleg protrusions, and a return connection passage is provided at the outer periphery, thereby constituting a closed gas flow system in which the fuel gas exiting the peripheral through-holes flows back and forth through the herringbone-like passages and returns to the adjacent peripheral through-holes.

The flow direction of the fuel and oxidant gases can comprise either an open gas flow system, a closed gas flow system, or a flow-in gas flow system as discussed above, and the stress generated in the stack will occur in different places depending on the combination and selection of gas flow.

For instance, with the structure in Fig. 5, if the fuel gas is a closed gas flow and the oxidant gas is an open gas flow, circumferential stress will consist of tension at the center and compression stress at the outer periphery, radial stress will be zero at the radial center and the outer periphery, and tensile stress will be generated in between. Also, with the structure in Fig. 5, if the fuel gas is a closed gas flow and the oxidant gas is a flow-in gas flow, unlike above, circumferential stress will consist of compression at the center and tensile stress at the outer periphery, radial stress will be zero at the radial center and the outer periphery, and compression stress will be generated in between.

Furthermore, the above-mentioned radial stress tends to be generated most strongly a little to the outside from the middle of the stack, and to avoid the generation of this stress, increasing the inside diameter of the center through-hole so that this stress generation point is included within the hole, for example, is an extremely useful way to make radial stress uniform.

It is particularly favorable for the stress generated in the radial direction of the stack to be made more uniform in this direction. If the power generation capability per unit of surface area of the cell increases, the amount of heat generated also increases, and this leads to a greater inner and outer temperature differential and increases the thermal stress, so the inner and outer temperature differential can be reduced. Therefore, generated heat must be dispersed as much as possible and released quickly. The amount of heat generated is proportional to the efficiency and unit surface area of the cell, and the inner and outer temperature differential can be lowered and the temperature distribution in the radial direction can be made more uniform by increasing the ratio of oxidant gas flow to fuel gas flow. Also, heat radiation can be promoted by increasing the gas separator plate thickness, which means that the temperature differential between the outer periphery and the center part of the stack can be reduced and the radial stress distribution can be made more uniform.

The ratio of oxidant gas flow to fuel gas flow is suitably selected according to the gas flow system, but is preferably at least 4 times the flow required for the combustion of the fuel gas, and even more preferably at least 8 times, which makes it possible to reduce the temperature differential between the center part and the outer periphery of the stack and to make the stress distribution more uniform in the radial direction.

Also, it is preferable for the gas separator plate to be as thin as possible in order to make the stack more compact, but the thickness should be selected according to the gas flow system in order to obtain the required stack strength, and a thickness of about 1.5 to 2.5 times the fuel-side electrode substrate thickness is favorable, as in the examples.

### Examples

### Example 1

A cell formation plate 1 structured the same as shown in Fig. 1 was produced by forming a stabilized zirconia (8YSZ) film with a thickness of 0.008 mm on one side of a fuel-side electrode substrate made of an Ni/YSZ cermet material with a diameter of 120 mm and a thickness of 0.5 mm, and forming over this an oxidant-side electrode film of (La,Sr)MnO₃ in a thickness of 0.05 mm, so that the resulting cell formation plate had a total thickness of 0.558 mm. The pattern of the gas passage hole component was the same as in Fig. 5, the outside diameter of the effective power generation component was 57 mm, and the gas passage hole component was equivalent to an inside diameter of 25 mm.

A gas separator plate structured as shown in Fig. 5 was produced by forming a gas passage pattern by etching both sides of a ferrite steel substrate with a diameter of 120 mm and a thickness of 0.8 mm, so that the substrate thickness was 0.2 mm and the passage height was 0.3 mm.

The resulting cell formation plates and gas separator plates were alternately stacked, a shaft was inserted into the center through-holes, a fastening disk made of ferrite steel was placed against both ends of the stack, and these disks were fastened to the shaft with nuts, thereby fastening the stacked plates so that they were in contact at their various gas passage hole components and producing a cell stack unit with 30 cell stages. This was placed inside a cylinder to produce a fuel cell in which the fuel gas could be recombusted with a closed gas flow system and the oxidant gas could be discharged to outside the cells and recovered within the cylinder with an open gas flow system. The sealing of the gas passage components when the cell formation plates and gas separator plates were alternately stacked was accomplished just by contact between the materials, and no sealing materials were used.

The coefficient of linear expansion (0 to 1000°C, α ×10⁻⁶) of the Ni/YSZ cermet material was 12.5, that of the (La,Sr)MnO₃ material was 12.5, and that of the ferrite steel was 12.7, and was therefore roughly the same for all the materials. That of the stabilized zirconia was 10.3, but since this material was used in the form of a thin film, this value was close enough in terms of the linear expansion coefficient in the thickness direction, and this, coupled with the basic structure in which disks were stacked and fastened at the center, resulted in excellent thermal cycle resistance.

Air (including 1 to 10 wt% water vapor) was used for the oxidant gas, and hydrogen for the fuel gas. The fuel cell was operated at a pressure of 500 Ps and a reaction temperature of 700 to 800°C. The power generation efficiency was measured and found to be 40%, with the combustion of gas occurring just one time, and efficiency was low with an open gas flow system.

The measurement conditions in Example 1 were as follows. The hydrogen flow was 0.44 g/s, the air flow was 70.0 g/s, the air inlet temperature was 700°C, the hydrogen fuel utilization was 70%, the power generation efficiency was 40%, and the air flow was 4.4 times the flow required for the combustion of the hydrogen gas used as the fuel gas.

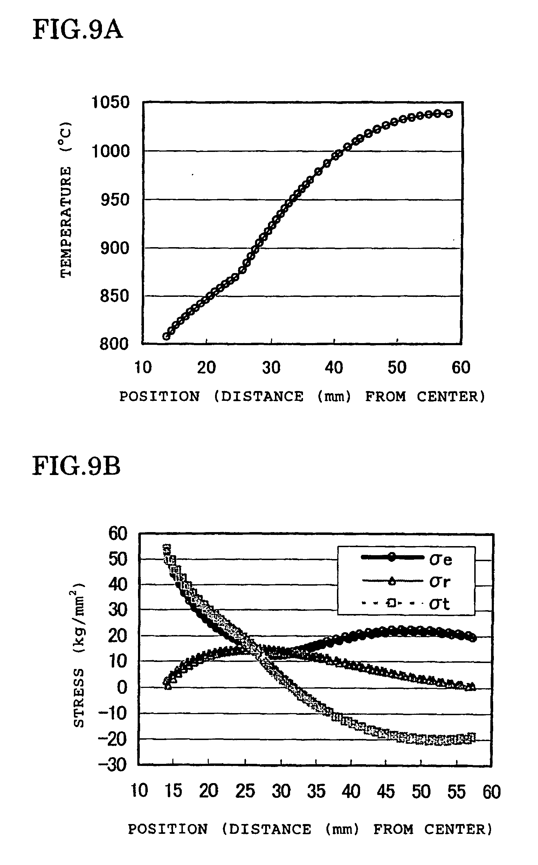

The temperature distribution and stress distribution of the cells in Example 1 were examined, which confirmed that the temperature differential in the circumferential direction of the cell surface was negligible, and yielded the results in the temperature distribution graph of Fig. 9A and the stress distribution graph of Fig. 9B. se in the graphs is the principal component of stress, sr is the radial stress, and st is the circumferential stress. The circumferential stress comprises tension at the center and compression stress at the outer periphery, radial stress is zero at the radial center and the outer periphery, and tensile stress is indicated in between.

### Example 2

Using the same 30-stage cell stack unit as in Example 1, power was generated at a per-cell hydrogen flow of 0.44 g/s, an air flow of 140.0 g/s, an air inlet temperature of 700°C, a hydrogen fuel utilization of 70%, a power generation efficiency of 40%, and an air flow that was 8.8 times the flow required for the combustion of the hydrogen gas used as the fuel gas, and the cell temperature distribution and stress distribution were examined.

When power was generated at twice the air flow, as shown in the temperature distribution graph of Fig. 9A and the stress distribution graph of Fig. 9B, the temperature differential between the inside and outside of the cells dropped to 160°C (880°C /720°C), which is about six-tenths of the 250°C (1050°C /800°C) differential under the basic conditions in Example 1, and the thermal stress also decreased to about 0.6 times. The temperature distribution pattern was the same as under the basic conditions.

### Example 3

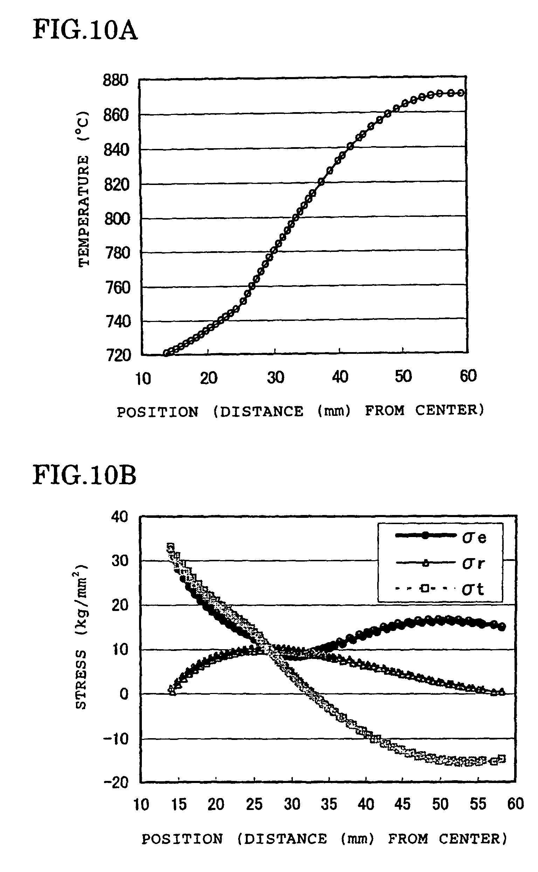

When the power generation of Example 1 was conducted under exactly the same conditions, except that the gas separator plate of Example 1 was changed to a thickness of 2 mm, as shown in the temperature distribution graph of Fig. 10A and the stress distribution graph of Fig. 10B, there was little change in the outside temperature of the cells as compared to Example 1, but the inside was higher (880°C), meaning that the external and internal temperature differential was about the same as in Example 2, dropping to about 0.6 times that of Example 1, and the thermal stress also decreased to about 0.6 times. The temperature distribution pattern was the same as in Examples 1 and 2.

### Example 4

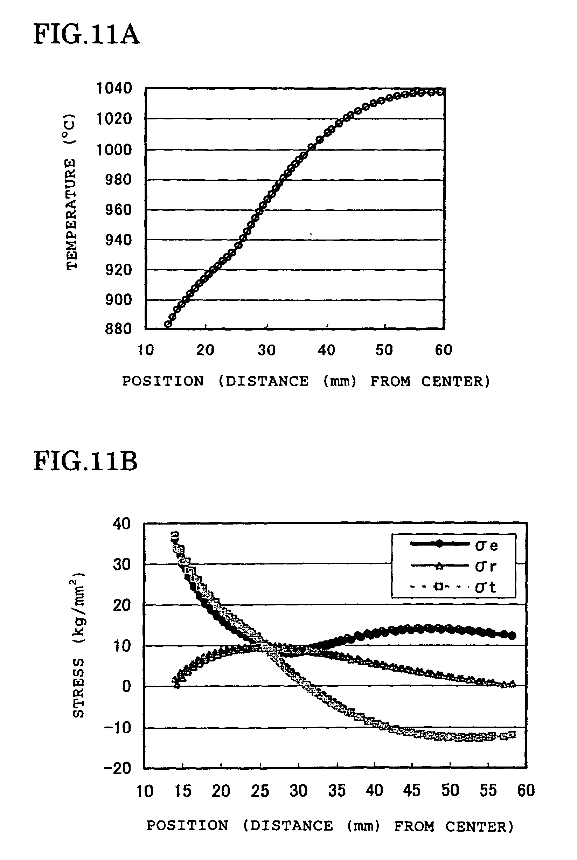

Under the conditions in Examples 2 and 3, that is, using the same 30-stage cell stack unit as in Example 1, power generation was performed at twice the air flow and approximately twice the gas separator plate thickness, whereupon, as shown in the temperature distribution graph of Fig. 11A and the stress distribution graph of Fig. 11B, the result was the sum of the results of Examples 2 and 3, and the external temperature of the cells was the same temperature (approximately 870°C) as in Example 2, in which the air flow was the same, but the internal temperature was approximately 35°C higher than in Example 2, so the internal and external temperature differential was less than in Example 3, dropping to about 0.46 times that of Example 1, and the thermal stress also decreased to approximately 0.5 times that of Example 1. The temperature distribution pattern was the same as in all the other examples.

With the structure in Examples 1 to 4, in which the air flowed from the center outward, the cooling air temperature rose along the flow, so the temperature was lower at the center (inside) and higher at the outside. The effect of this temperature distribution is that there is thermal stress in the tensile direction in the circumferential direction on the inside of the cell, and thermal stress in the compression direction on the outside of the cell. Therefore, an increase in air flow lowers the temperature on the outside of the cell, and an increase in gas separator plate thickness improves the diffusion of heat, allowing a decrease in the internal and external temperature differential and reducing the amount of thermal stress.

### Example 5

Gas separator plates with the structure shown in Fig. 5 and having the same dimensions and made of the same material as in Example 1, and cell formation plates on which gas passage components the same as those on these gas separator plates were produced, and cells were stacked in 30 stages to produce a cell stack unit. This was placed in a cylinder to produce a fuel cell in which the fuel gas could be recombusted with a closed gas flow system and the oxidant gas was in a flow-in gas flow system so that air supplied into the cylinder outside the cells penetrated into the cells. Here again, the sealing of the gas passage components when the cell formation plates and gas separator plates were alternately stacked was accomplished just by contact between the materials, and no sealing materials were used.

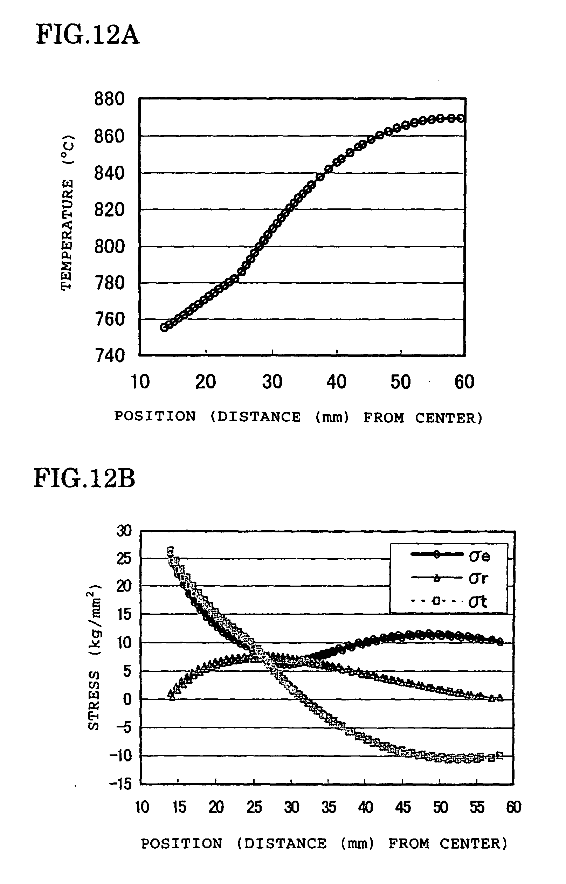

Just as in Example 1, the per-cell hydrogen flow was 0.44 g/s, the air flow was 70.0 g/s, the air inlet temperature was 700°C, the hydrogen fuel utilization was 70%, the power generation efficiency was 40%, and the air flow was 4.4 times the flow required for the combustion of the hydrogen gas used as the fuel gas. The temperature distribution and stress distribution of the cells were examined, which yielded the temperature distribution graph of Fig. 12A and the stress distribution graph of Fig. 12B.

In Example 5, in which just the air flow direction of Example 1 was changed to going from the outside to the center, unlike in Example 1, the circumferential stress was compression at the center and tensile stress at the outer periphery, the radial stress was zero at the radial center and the outer periphery, and compression stress was indicated in between. A high principal component of stress was noted at the center and on the outside. At the center, however, this was compression stress.

### Example 6

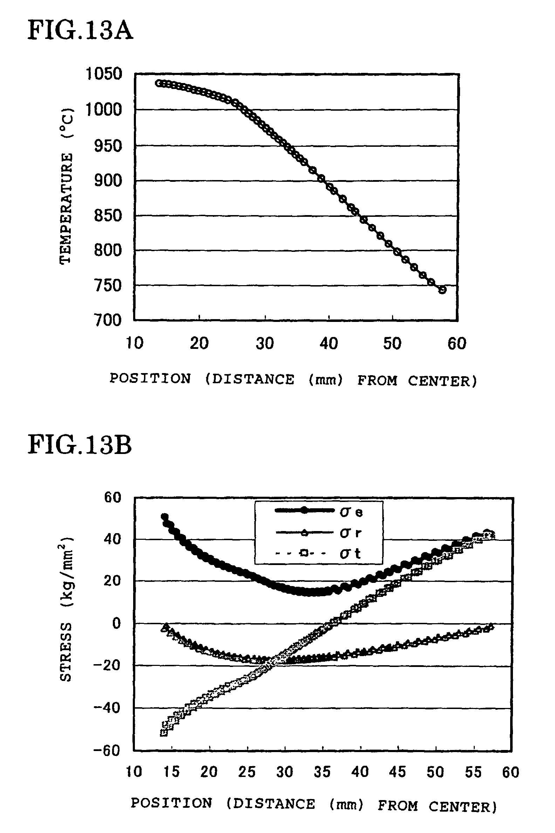

In Example 5, the air flow was increased and power generation was performed such that the air flow (moles) was 20 times the hydrogen flow (moles), and the temperature distribution and stress distribution of the cells were examined. As shown in the temperature distribution graph of Fig. 13A and the stress distribution graph of Fig. 13B, just as in Example 2, the temperature differential inside and outside the cells was 870°C /720°C. and was about 0.5 times that in Example 5 (1035°C /740°C), and the thermal stress also decreased to about 0.5 times. The temperature distribution pattern was the same as in Example 5.

### Example 7

Gas separator plates with the structure shown in Fig. 8 and having the same dimensions and made of the same material as in Example 1, and cell formation plates on which gas passage components the same as those on these gas separator plates were produced, and cells were stacked in 30 stages to produce a cell stack unit. This was placed in a cylinder to produce a fuel cell in which the oxidant gas was in an open gas flow system in which it flowed from the center to the outer periphery as shown in Fig. 8, while the fuel gas could be recombusted in a closed gas flow system in which return communicating passages were provided to the outer periphery and slender dogleg protrusions were formed just as in Fig. 8, so that the fuel gas exiting the peripheral through-holes went back and forth through herringbone-like passages and returned to the adjacent peripheral through-holes. Here again, the sealing of the gas passage components when the cell formation plates and gas separator plates were alternately stacked was accomplished just by contact between the materials, and no sealing materials were used.

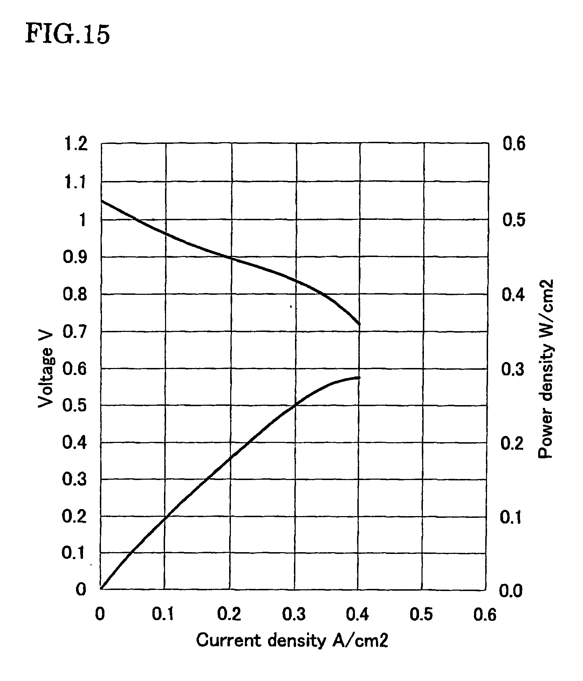

Just as in Example 1, the per-cell hydrogen flow was 0.44 g/s, the air flow was 70.0 g/s, the air inlet temperature was 700°C, the hydrogen fuel utilization was 70%, the power generation efficiency was 40%, and the air flow was 4.4 times the flow required for the combustion of the hydrogen gas used as the fuel gas. Power was generated under these conditions, and the output voltage and current were measured to produce the performance curve in Fig. 15.

### INDUSTRIAL APPLICABILITY

With the fuel cell pertaining to the present invention, as is clear from the examples, a gas passage hole component is provided at the center part of a substrate, which allows the cell formation plate and the metal gas separator plate to be formed extremely thin. For example, the pitch of the stacked cell formation plates can be 2 mm or less, allowing the fuel cell to be extremely compact and lightweight, and as mentioned above, the number of parts is basically limited to just two types of substrates, so the fuel cell can be provided at a lower cost. Also, the structure of the present invention in which the entire stack unit is fastened at the gas passage hole components in the center part of the substrates makes it possible to increase the thermal cycle resistance produced when the fuel cell is operated at high temperature.

Also, with the metal gas separator plate pertaining to the present invention, the gas passage pattern and collection protrusions can be formed precisely by etching, so the optimal gas passages can be set according to the types of gas and taking into account the gas pressure, the gas flow in an open or closed system, and other such factors, which allows gas pressure loss to be reduced and power generation efficiency to be increased.

In particular, since fuel gas passage and oxidant gas passage patterns can be formed on either side of the metal gas separator plate, as shown in the examples, grooves of 0.5 mm or less in both depth and width are formed at a pitch of 2 mm or less in a metal plate with a thickness of 1 mm or less to create a passage pattern optimally suited to each gas flow on each main surface, so the weight of the plate is markedly lower, and the number of laminations can also be reduced by using both sides of the gas separator plate, which reduces the weight of the stacked cell stack unit.

Furthermore, when the ferrite steel of the examples or the like is used for the metal gas separator plate, the linear expansion coefficient will approximate that of the other electrode materials, and this, coupled with the fact that the cell stack unit itself is fastened and supported at the gas passage hole components at the center, results in better thermal cycle resistance.

With the fuel cell pertaining to the present invention, increasing the oxidant gas flow prevents the generation of thermal stress by lowering the temperature differential between inside and outside the cells, and the fuel gas can also be recombusted in a closed gas flow system, and the oxidant gas can be in a flow-in gas flow system in which it flows from the outside of the cells to the center part, resulting in a configuration in which tensile stress is produced at the outer periphery of the stacked disks and compression stress at the center, and affording a marked increase in stack strength and thermal cycle resistance.

## Claims

1. A fuel cell comprising a stack produced by stacking a cell formation plate having in the center part of a disk a passage hole component made up of a center through-hole disposed concentrically with the center axis and a plurality of peripheral through-holes provided around the outer periphery of the center through-hole and a gas separator plate having in the center part of a disk a passage hole component constituted in the same manner as above and having reaction gas passages formed of a main surface around the outer periphery thereof, some of all of the through-holes forming gas passages for a fuel or oxidant gas, and the reaction gas passages between the stacked plates being connected or shut off by the gas passage pattern formed in the passage hole component, wherein the ratio of the oxidant gas flow to the fuel gas flow and the thickness of the gas separator plate are selected according to the amount of heat generated, which is increased or decreased by the selection of the flow direction of the fuel or oxidant gas, whereby the temperature differential between the outer peripheral and center parts of the stack is decreased, and the stress distribution is made uniform in the radial direction.

2. The fuel cell according to Claim 1, wherein the fuel and oxidant gases flow from the center to the outer periphery of the stack, the oxidant gas flow ratio is at least four times the flow required for the combustion of the fuel gas, the temperature differential between the outer peripheral and center parts of the stack is decreased, and the stress distribution is made uniform in the radial direction.

3. The fuel cell according to Claim 1, wherein the fuel and oxidant gases flow from the center to the outer periphery of the stack, the gas separator plate thickness is increased according to the amount of heat generated, the temperature differential between the outer peripheral and center parts of the stack is decreased, and the stress distribution is made uniform in the radial direction.

4. The fuel cell according to Claim 1, wherein the fuel and oxidant gases flow from the center to the outer periphery of the stack, the oxidant gas flow ratio is at least four times the flow required for the combustion of the fuel gas, the gas separator plate thickness is increased according to the amount of heat generated, the temperature differential between the outer peripheral and center parts of the stack is decreased, and the stress distribution is made uniform in the radial direction.

5. The fuel cell according to Claim 1, wherein the fuel gas flows from the center to the outer periphery of the stack and the oxidant gas flows from the outer periphery to the center, so that compression stress is generated at the center of the stack, the temperature differential between the outer peripheral and center parts of the stack is decreased, and the stress distribution is made uniform in the radial direction.

6. The fuel cell according to Claim 1, wherein the fuel gas flows from the center to the outer periphery of the stack and the oxidant gas flows from the outer periphery to the center, so that compression stress is generated at the center of the stack, the oxidant gas flow ratio is at least four times the flow required for the combustion of the fuel gas, the temperature differential between the outer peripheral and center parts of the stack is decreased, and the stress distribution is made uniform in the radial direction.

7. The fuel cell according to any of Claims 1 to 6, wherein at least one of the center through-hole and the peripheral through-holes is used exclusively as insertion hole for a fastening shaft of the stack, or also as a gas passage.

8. The fuel cell according to any of Claims 1 to 6, wherein a heat exchange means is arranged at least in one of the center through-hole and the peripheral through-holes.

9. The fuel cell according to any of Claims 1 to 6, comprising an open gas flow system in which the fuel gas and oxidant gas are released from the passage hole component at the center, through the reaction gas passages between the stacked plates, to the outer periphery of the stack.

10. The fuel cell according to any of Claims 1 to 6, comprising a closed gas flow system in which the fuel gas and the oxidant gas flow from the passage hole component at the center, through the radial reaction gas passages between the stacked plates, and are returned to the passage hole component at the center.

11. The fuel cell according to any of Claims 1 to 6, comprising an open gas flow system in which either the fuel gas or the oxidant gas is released from the passage hole component at the center, through the reaction gas passages between the stacked plates, to the outer periphery of the stack, and a closed gas flow system in which the other gas flows from the passage hole component at the center, through the radial reaction gas passages between the stacked plates, and is returned to the passage hole component at the center.

12. The fuel cell according to any of Claims 1 to 6, comprising a flow-in gas flow system in which either the fuel gas or the oxidant gas is introduced from the outer periphery of the stack, through the reaction gas passages between the stacked plates, into the passage hole component at the center, and a closed gas flow system in which the other gas flows from the passage hole component at the center, through the radial reaction gas passages between the stacked plates, and is returned to the passage hole component at the center.

13. The fuel cell according to any of Claims 1 to 6, wherein the cell formation plate comprises a laminated substrate produced by sequentially laminating a fuel electrode substrate, a solid electrolyte substrate, and an odidant-side electrode substrate, and the passage hole component is formed at the axial center of said substrates.

14. The fuel cell according to any of Claims 1 to 6, wherein the cell formation plate comprises a laminated substrate produced by forming a film of material on one or both sides of any of the material substrates in the order of fuel electrode layer, solid electrolyte layer, and odidant-side electrode layer.

15. The fuel cell according to any of Claims 1 to 6, wherein the gas separator plate is constructed by either a reaction fuel gas passage or an oxidant gas passage pattern on one main surface around the outer periphery of the passage hole component, or forming a reaction fuel gas passage and an oxidant gas passage pattern on both main surfaces.

16. The fuel cell according to Claim 15, wherein the gas separator plate is made of a metal or an alloy, and the reaction gas passage pattern is formed by etching on a main surface.

17. The fuel cell according to Claim 15, wherein the gas separator plate is made of a metal or an alloy, the reaction gas passage pattern is formed by etching on a main surface, and the plate thickness is 1 mm or less.

18. The fuel cell according to Claim 15, wherein the gas separator plate is made of a metal or an alloy, and the reaction gas passage pattern is formed by the disposition of a metal or alloy mesh member.

19. The fuel cell according to Claim 15, wherein the gas separator plate is made of a metal or an alloy, and the reaction gas passage pattern is formed by the disposition of a punched or etched metal or alloy member.
